# EUROPEAN PATENT APPLICATION

(11) **EP 2 692 402 A1**
(43) Date of publication of application: **05.02.2014**
(21) Application number: 12178606.5
(22) Date of filing: 31.07.2012
(51) Int. Cl.: B01D 11/04, B01D 61/18, B01D 63/06

(54) **Phase separation element and phase separation device**

(71) Applicant: Biotage AB, 753 18 Uppsala (SE)
(72) Inventor: Jordan, Steve, Herts, AL8 7NW (GB); Davies, Geoff, Newport, Gwent NP10 9JU (GB); Rana, Sunil, Mid Glamorgan, CF82 7BT (GB)
(74) Representative: Brann AB

(57) **Abstract**

The present invention relates to a phase separation element and a phase separation device comprising such a phase separation element, which may be used for separating a biphasic aqueous and organic liquid system irrespective of which liquid is heavier.

## Description

### FIELD OF THE INVENTION

The present invention relates generally to the field of phase separation, and more particularly to a phase separation element and a phase separation device comprising such a phase separation element.

### BACKGROUND OF THE INVENTION

Phase separation is a type of liquid-liquid extraction and is a method of processing and purifying samples. Traditional phase separators are cartridge products that separate one of two immiscible liquid phases when the lower phase is organic and the upper phase is aqueous. Because of their general function, phase separators find application in a variety of different applications and markets. Phase separators are predominantly used in a chemistry environment in a variety of different applications, ranging from crude reaction work-up to preparation of samples or intermediates for synthetic programs, and a number of environmentally sensitive applications can also be captured.

The key to the separation of the two liquids is in the design of the frit material used in the cartridges. The main limitation of traditional phase separators is that they only work when the organic layer is on the bottom, i.e. the aqueous layer sits on top. This typically only occurs when organic samples are extracted into chlorinated (heavy) solvents. The mixture is transferred to the phase separator, and only the lower organic layer is allowed to pass through the cartridge. The frit is thus impervious to aqueous solvents, but allows passage of chlorinated solvents. The traditional separator is designed to rapidly separate chlorinated and aqueous solvents under gravity. No vacuum or positive pressure is required.

However, chemical products are often extracted into a less toxic and less dense organic solvent than chlorinated solvents, such as ethyl acetate. Recent moves towards green chemistry and tightening local and environmental regulations also restrict the use of chlorinated solvents in chemical laboratories, and disposal of these solvents is becoming prohibitively expensive for routine lab use and applications.

At present, one way to separate non-chlorinated organic solvents from aqueous solvents is to use hydrophobic filter papers, which are treated filter papers designed to be used in filter funnels or Buchner funnels (see e.g. http://www.whatman.com/). These suffer the drawback of being fragile when wet and risk breakthrough and contamination if not operated correctly.

A device for separating water from an organic solvent, irrespective of which one of the liquids is heavier, is described in US20060054556A1. The device comprises a tubular member which has an opening in the wall, which opening is covered by a water impermeable hydrophobic membrane. The tubular member is loosely fitted in an outer tube having a discharge outlet at the bottom. A mixture of water and organic solvent contained in the tubular member will be separated as the organic solvent can pass through the membrane from the inside to the outside while the water is retained in the tubular member. The membrane may be in the form of a membrane filter having a pore size of 0.1 to 2 µm. The membrane may alternatively be processed by spraying silicone or Teflon on the surface of solvent insoluble fibre to make it hydrophobic.

### BRIEF DESCRIPTION OF THE DRAWINGS

Fig. 1 is a schematic view of an embodiment of the phase separation element according to the invention, wherein the phase separation element is a cylinder, which is tubular and has a lumen with an outlet.
Fig. 2 is a schematic view of an alternative embodiment of the phase separation element according to the invention, wherein the phase separation element is a cylinder, which is solid.
Fig. 3 is a schematic view of the phase separation device according to the invention, comprising a receptacle and a phase separation element, wherein the phase separation element fits tight in an outlet portion of the receptacle.
Fig. 4a, 4b and 4c show an alternative embodiment of the phase separation device according to the invention, comprising a receptacle and a phase separation element, wherein the phase separation element fits in a bottom portion of the receptacle. Fig. 4a is a schematic view of a longitudinal cross-section of the bottom part of the phase separation device. Fig. 4b and 4c show alternative embodiments of a horizontal cross-section of the bottom portion of the receptacle.
Fig. 5 is a schematic view of another alternative embodiment of the phase separation device according to the invention, comprising a receptacle and a phase separation element, wherein the outlet portion of the receptacle further comprises an insert.
Fig. 6 is a schematic view of an alternative embodiment of the phase separation device according to the invention, comprising a receptacle, a phase separation element, an insert and a second phase separation element.
Fig. 7 illustrates the general principle of how a prior art phase separator works and how the phase separation device according to the present invention functions.

### SUMMARY OF THE INVENTION

The object of the present invention is to provide a more efficient, easy-to-use phase separator than those already known in the art for separating a biphasic aqueous and organic liquid system irrespective of which liquid is heavier.

An aim of the present invention is to enable separation of two immiscible liquid phases where the organic layer is lighter than the aqueous layer, such as when mixing water with an organic solvent selected from hexane, ethyl acetate, petroleum ethers, diethyl ether, or toluene. However, the present invention also enables separation where the organic liquid is heavier that the aqueous liquid, i.e. it provides a universal solution for both heavier and lighter organic liquids.

Further objects of the present invention are to provide a phase separator, which has a capacity to separate dispersions or shaken suspensions, and a phase separator, in which the mixture does not need to stand to separate, i.e. which can operate in continuous mode.

The present invention relates to a phase separation element, comprising a porous and hydrophobic material, wherein the phase separation element is a cylinder having a first end and a second end.

The porous and hydrophobic material allows hydrophobic liquid to pass through the phase separation element, while the material prevents (or at least delays) non-hydrophobic liquids from entering and passing through the material. Another term for the phase separation element is "frit", which is often used in the technical field of phase separation.

According to a first embodiment, the invention provides a phase separation element, in which the cylinder is tubular and has a lumen, and an outlet portion having an outlet opening at the first end of the cylinder.

In an embodiment, the phase separation element is closed at the second end of the cylinder. In an alternative embodiment, the phase separation element is open at the second end of the cylinder.

According to a second embodiment, the invention provides a phase separation element, in which the cylinder is solid, i.e. without a lumen. Nevertheless, hydrophobic liquid will pass through the phase separation element due to the porous structure of the hydrophobic material of the phase separation element.

In a preferred embodiment of the invention, the phase separation element essentially consists of a porous and hydrophobic polymer material, which can be obtained from manufacturers such as Filtrona, Porvair and Porex. The porous and hydrophobic material can be selected from for example polyethylene, polypropylene and polytetrafluoroethylene (PTFE).

According to another aspect, the invention provides a phase separation device comprising a receptacle having an outlet portion comprising an outlet opening, and a phase separation element comprising a porous and hydrophobic material, wherein the phase separation element is a cylinder having a first end and a second end, wherein the phase separation element is in fluid communication with the outlet opening of the receptacle, and wherein the phase separation element is adapted to fit tight in the outlet portion of the receptacle.

In an alternative embodiment, the phase separation device comprises a receptacle having a bottom portion, and a phase separation element comprising a porous and hydrophobic material, wherein the bottom portion has an inner surface and optionally has an outlet portion comprising an outlet opening, wherein the phase separation element is a cylinder having a first end and a second end and a base surface comprising at least three circumferential points that are adapted to contact the inner surface of the bottom portion of the receptacle, and that the base surface of the cylinder has a different shape than the cross section area of the bottom portion, and that the phase separation element is adapted to fit in the bottom portion by connection between the inner surface of the bottom portion and the at least three circumferential points of the base surface of the cylinder.

In yet another embodiment of the phase separation device, the outlet portion of the receptacle comprises an insert, which has an inlet end having an inlet opening and an outlet end having an outlet opening and a lumen extending through the insert, wherein the inlet end of the insert is adapted to fit tight in the outlet portion of the receptacle, and wherein the phase separation element is adapted to fit tight in the inlet opening of the insert, and wherein the phase separation element is in fluid communication with the outlet opening of the insert.

### DETAILED DESCRIPTION

The present invention will now be described by reference to the appended drawings, followed by examples of using the device according to the invention.

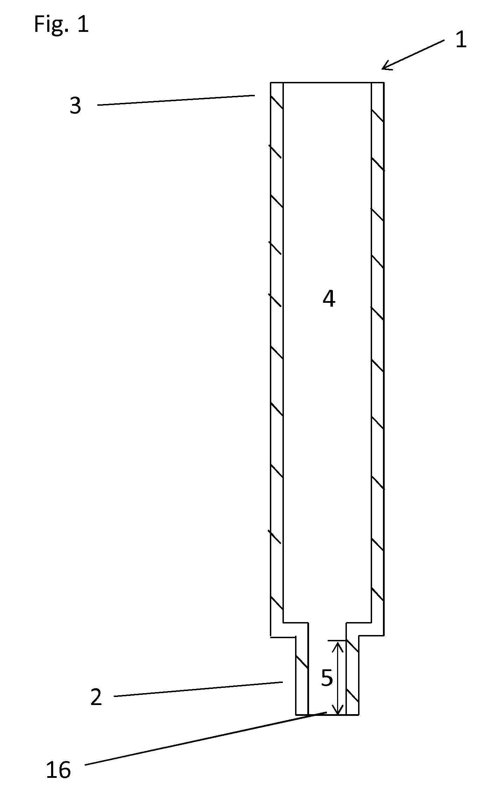

With reference to fig. 1, a first embodiment of the present invention relates to a phase separation element 1, comprising a porous and hydrophobic material, wherein the phase separation element 1 is a cylinder having a first end 2 and a second end 3.

For the purpose of the present application, the term "cylinder" is defined as a three-dimensional space geometric body (unknown inner) delimited by two identical, parallel spaced planar surfaces (base surfaces) and the envelope surface formed as a line connecting the corresponding points on both base surfaces can run along the base surface entire circumference. In the most general case, the flat surface can be used as a base, and parallel displacement can have any angle to the base surface. The perpendicular distance between the surfaces is called height of the cylinder. The base surface can have any form. If the base surface is a circle, the cylinder is called a circular cylinder.

In an embodiment of the present invention, the phase separation element is a circular cylinder.

In accordance with the embodiment shown in fig. 1, the cylinder is tubular and has a lumen 4, and thus the phase separation element per definition has a wall thickness which is less than the radius of the cylinder. For example, the wall thickness may be at least 0.5 mm, such as 1, 2, 3, 4, 5, 10, 20, 50, or 100 mm, depending on the size of the phase separation element and its intended use. The lumen of the tubular cylinder may be narrow, such as in the range of 1-2 mm, or broader, also depending on the size of the phase separation element and its intended use.

In fig. 1, the phase separation element 1 further has an outlet portion 5 having an outlet opening 16 at the first end 2 of the cylinder.

Suitably, the outlet portion 5 of the cylinder has a smaller outer diameter than the outer diameter of the second end 3 and the rest of the cylinder.

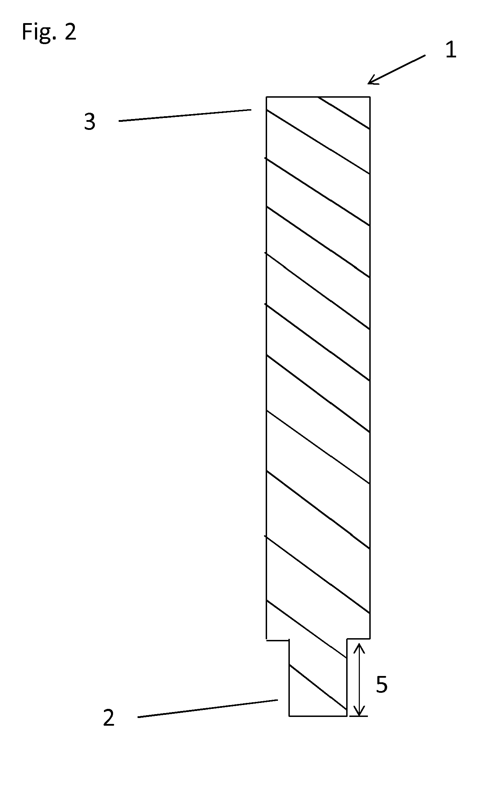

Fig. 2 shows an alternative embodiment of the phase separation element 1, comprising a porous and hydrophobic material, wherein the phase separation element 1 is a cylinder having a first end 2 and a second end 3, and wherein the cylinder is solid.

In fig. 2, the phase separation element has an outlet portion 5 at the first end 2. Also here, the outlet portion 5 of the cylinder suitably has a smaller outer diameter than the outer diameter of the second end 3 and the rest of the cylinder.

The embodiments of the phase separation element shown in fig. 1 and 2 are suitable for the separation of a mixture of immiscible liquids, where the mixture is provided outside of the phase separation element and the hydrophobic liquid is allowed to pass through the phase separation element from the outside to the inside, while the non-hydrophobic liquid is retained outside of the phase separation element.

In an alternative embodiment to those shown in fig. 1 and fig. 2, the phase separation element does not comprise an outlet portion 5, and does not comprise an outlet opening 16, but has all other features as disclosed above; i.e. in this alternative embodiment the phase separation element 1 comprises a porous and hydrophobic material, and the phase separation element 1 is a cylinder having a first end 2 and a second end 3. Further, the cylinder is either tubular and has a lumen 4, or is solid.

This embodiment is suitable for the separation of a mixture of immiscible liquids, where the mixture is poured into the phase separation element and the hydrophobic liquid is allowed to pass through the phase separation element from the inside to the outside, while the non-hydrophobic liquid is retained inside the phase separation element. In this case, the liquid may exit the phase separation element anywhere along the surface of the phase separation element, and thus there is no need for a specific outlet portion. In this alternative embodiment, the first end 2 of the cylinder suitably has a smaller outer diameter than the outer diameter of the second end 3 and the rest of the cylinder.

In an embodiment of the present invention, the porous and hydrophobic material of the phase separation element has a pore size of above 2 µm and maximum 100 µm, such as about 5, 10, 15, 20, 50, 75 or 100 µm.

In a preferred embodiment of the invention, the phase separation element essentially consists of a porous and hydrophobic polymer material, which can be selected from for example polyethylene, polypropylene and polytetrafluoroethylene (PTFE).

In a presently preferred embodiment of the invention, the phase separation element is made of porous polyethylene material with a 10µm pore size and a wall thickness of 1 mm.

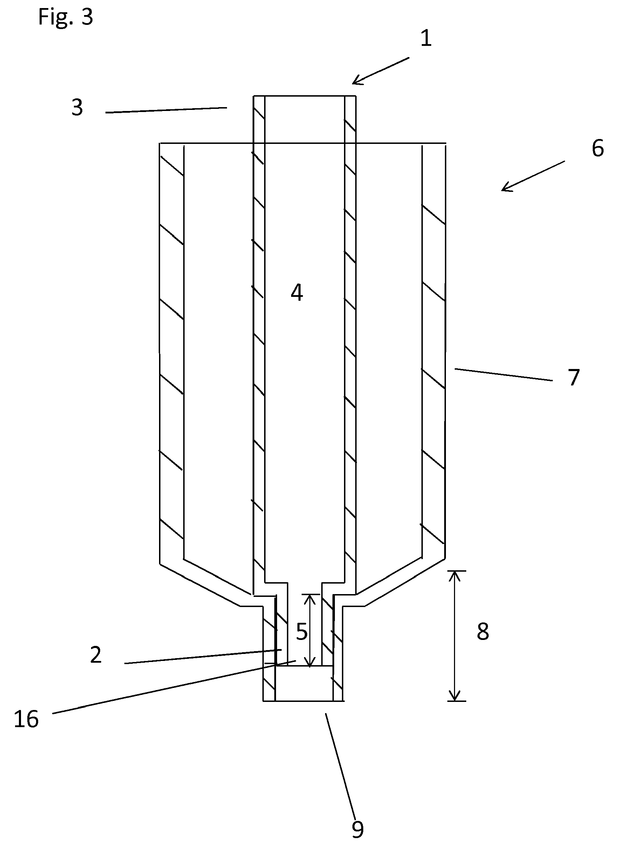

Fig. 3 depicts a phase separation device 6 comprising a receptacle 7 having an outlet portion 8 comprising an outlet opening 9, and a phase separation element 1 comprising a porous and hydrophobic material, wherein the phase separation element 1 is a cylinder having a first end 2 and a second end 3. The phase separation element 1 is in fluid communication with the outlet portion 8 of the receptacle 7, such that fluid passing through the lumen 4 and exiting the phase separation element 1, via the outlet opening 16 of the outlet portion 5 at the first end 2 of the cylinder, can run through the outlet opening 9. The phase separation element 1 is adapted to fit tight in the outlet portion 8 of the receptacle 7, such that no fluid present in the receptacle 7, outside of the phase separation element 1, can run through the outlet opening 9 of the receptacle 7.

As mentioned above, in fig. 3 the cylinder is tubular and has a lumen 4, and an outlet portion 5 having an outlet opening 16 at the first end 2 of the cylinder. However, in an alternative embodiment of the phase separation device 6, the cylinder could instead be solid, as depicted in fig. 2. Also in this alternative embodiment, the phase separation element 1 is in fluid communication with the outlet portion 8 of the receptacle 7, such that fluid passing through the solid cylinder of the phase separation element 1 and exiting the phase separation element 1, via the outlet portion 5 at the first end 2 of the cylinder, can run through the outlet opening 9 of the receptacle. As above, the phase separation element 1 is adapted to fit tight in the outlet portion 8 of the receptacle 7, such that no fluid present in the receptacle 7, outside of the phase separation element 1, can run through the outlet opening 9 of the receptacle 7.

The tight fit of the phase separation element 1 in the outlet portion 8 of the receptacle 7 may be obtained by choosing the same shape of the base surface of cylinder of the phase separation element 1 and of the cross section of the outlet portion 8. For example, if the cross section of the outlet portion 8 is circular, the base surface of the cylinder shall also be circular. In an embodiment, the phase separation element 1 fits tight in the outlet portion 8 of the receptacle 7 by threaded connection, by clamping, squeezing or pressing the phase separation element 1 into the outlet portion 8 of the receptacle 7, or by welding.

In a preferred embodiment, it is the outlet portion 5 at the first end 2 of the cylinder of the phase separation element 1, which fits tight in the outlet portion 8 of the receptacle 7.

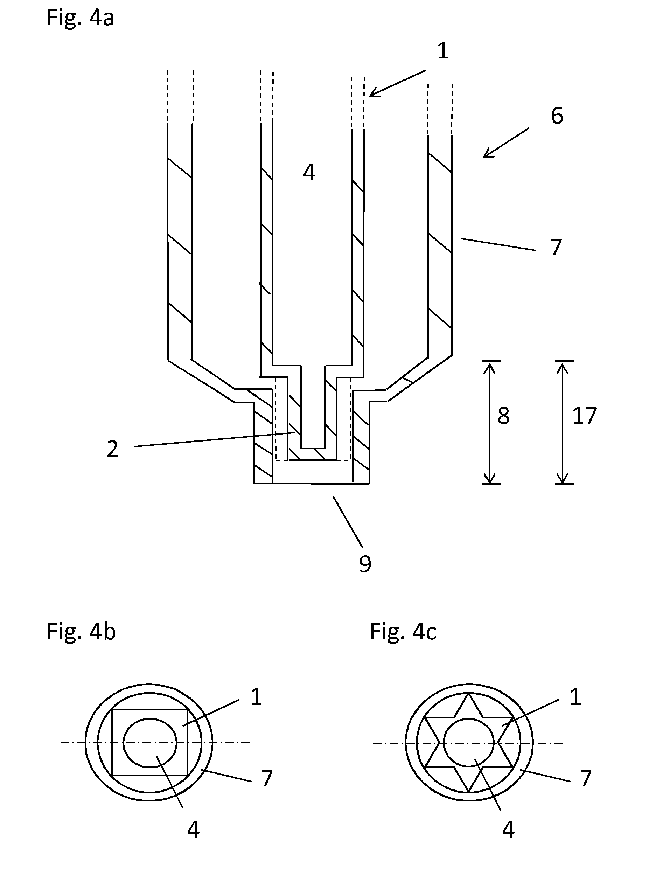

In an alternative embodiment of the phase separation device 6, in accordance with fig. 4a-4c, the phase separation element 1 essentially consists of a porous and hydrophobic material, and the phase separation element 1 is a cylinder having a first end 2 and a second end 3. Further, the cylinder is either tubular and has a lumen 4, as shown in fig. 4, or the cylinder is solid, as shown in fig. 2. In this alternative embodiment of the phase separation device 6, the receptacle 7 has a bottom portion 17. The bottom portion 17 may optionally have an outlet portion 8 comprising an outlet opening 9. As shown in fig. 4a, the phase separation element 1 is adapted to fit in the bottom portion 17 of the receptacle 7, such that the outer surface of the phase separation element 1 contacts the inner surface of the bottom portion 17 at some points. In this way, the phase separation element 1 is fixed to the bottom portion 17 of the receptacle, while leaving some space (such as a gap or a distance) between parts of the outer wall of the phase separation element 1 and the inner wall of the bottom portion 17. This type of fit of the phase separation element 1 in the bottom portion 17 of the receptacle 7 may be obtained by choosing different shapes of the base surface of the cylinder of the phase separation element 1 and of the cross section area of the bottom portion 17. The base surface of the cylinder of the phase separation element 1 shall have a shape that has at least three corners, angles, edges or points (i.e. points on the circumference of the base surface, here also called circumferential points), that are adapted to contact, touch or connect to the inner surface of the bottom portion 17. For example, if the cross section of the bottom portion 17 of the receptacle 7 is circular, the base surface of the cylinder of the phase separation element 1 may be triangular, square-shaped (fig. 4b), or star-shaped (fig. 4c). A star-shaped base surface may have any number of points, such as 5, 6, 7, 8, 9 or 10. If the cross-section of the bottom portion 17 of the receptacle 7 is square-shaped or star-shaped, the base surface of the cylinder may for example be circular, etc.

This embodiment is suitable for the separation of a mixture of immiscible liquids, where the mixture is poured into the phase separation element and the hydrophobic liquid is allowed to pass through the phase separation element from the inside to the outside and is collected in the receptacle 7. The hydrophobic liquid may then be allowed to exit the receptacle 7 through an outlet opening 9, or may alternatively be retained in the receptacle 7 if the bottom portion 17 does not comprise an outlet opening 9, or if the outlet opening 9 is sealed, such as by use of a plug. The non-hydrophobic liquid will be retained inside the phase separation element 1 since the first end 2 of the phase separation element 1 is sealed.

Further in this embodiment, the first end 2 of the cylinder suitably has a smaller outer diameter than the outer diameter of the second end 3 and the rest of the cylinder. In a preferred embodiment, it is the first end 2 of the cylinder of the phase separation element 1, which fits in the bottom portion 17 of the receptacle 7.
In an alternative embodiment to that shown in fig. 4, the phase separation element has an outlet portion 5 at the first end 2 of the cylinder (and if the cylinder is tubular and has a lumen 4, the outlet portion comprises an outlet opening 16), through which outlet portion the non-hydrophobic liquid may exit. In this embodiment, a second outlet opening is suitably located at one side of the bottom portion 17 of the receptacle 7, through which second opening the hydrophobic liquid may be drained, while the non-hydrophobic liquid may be drained via the outlet opening 9 of the receptacle 7. This arrangement necessitates that the outlet opening 9 is separated from the second outlet opening by a tight seal in any suitable manner, as known to a person skilled in the art.

In yet other embodiments of the phase separation device 6, the phase separation element 1 is as defined in any one of the above-described embodiments. A phase separation element which is defined by a combination of two or more of the above-described embodiments is also within the scope of the present invention.

In yet an embodiment of the phase separation device 6, the receptacle 7 has an inlet opening (not shown).

In another embodiment of the phase separation device 6, the diameter of the receptacle 7 decreases step-wise at the outlet portion 8 such that a step is formed inside the receptacle 7 at a distance above the outlet opening 9 of the receptacle, and wherein the phase separation element 1 is adapted to fit into said step inside the receptacle 7.

In yet another embodiment of the invention, the phase separation device 6 comprises a plurality of phase separation elements 1, each of which is a cylinder comprising a porous and hydrophobic material and is adapted to fit tight in a hole in the outlet portion 8 of the receptacle 7. In said embodiment, each hole in the outlet portion 8 of the receptacle 7 may preferably be connected to the outlet opening 9 of the receptacle 7.

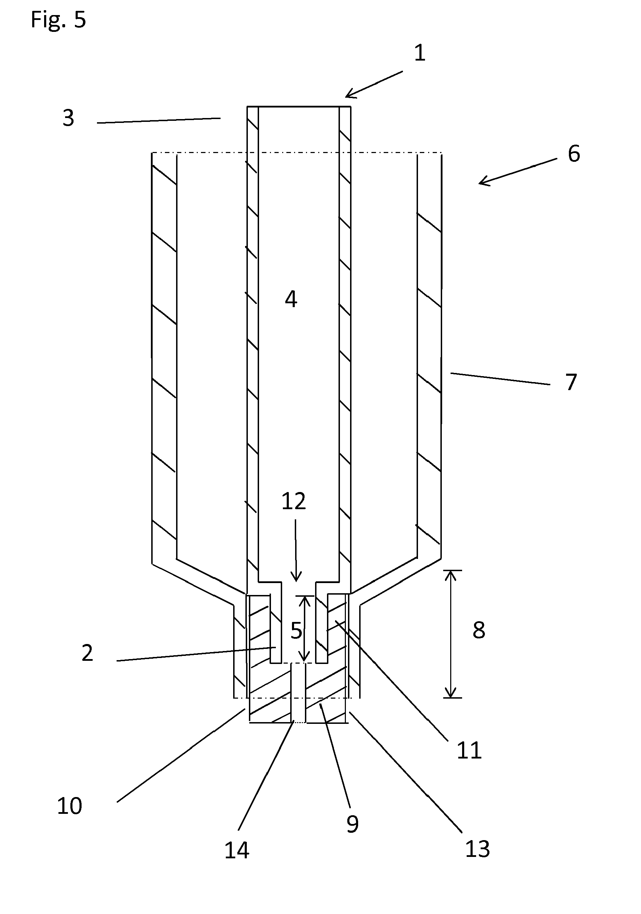

With reference to fig. 5, a further embodiment of the phase separation device 6 comprises a third piece, which is an insert 10, which has an inlet end 11, having an inlet opening 12, and an outlet end 13, having an outlet opening 14, and a lumen extending through the insert 10. The inlet end 11 of the insert 10 is adapted to fit tight in the outlet portion 8 of the receptacle 7, and the phase separation element 1 is adapted to fit tight in the inlet opening 12 of the insert 10, and the lumen 4 of the phase separation element 1 is in fluid communication with the outlet opening 14 of the insert 10.

The insert 10 as depicted in fig. 5 could also be applied to a phase separation device 6 comprising a receptacle 7 and a phase separation element 1 wherein the cylinder is solid.

In an embodiment, the phase separation element 1 fits tight in the inlet opening 12 of the insert 10 by threaded connection, by clamping, squeezing or pressing the phase separation element 1 into the inlet opening 12 of the insert 10, or by welding.

In a preferred embodiment, it is the outlet portion 5 at the first end 2 of the cylinder of the phase separation element 1, which fits tight in the inlet opening 12 of the insert 10.

In an alternative embodiment to that shown in fig. 5, the insert 10 could instead be applied to a phase separation device 6 comprising a receptacle 7 and a phase separation element 1, wherein the phase separation element 1 is adapted to fit in a bottom portion 17 of the receptacle 7, said bottom portion 17 optionally comprising an outlet portion 8 having an outlet opening 9, in such a way that there is some space between the outer wall of the phase separation element 1 and the inner wall of the bottom portion 17, as described in more detail above.

In a preferred embodiment, the inlet end 11 of the insert 10 fits tight in the outlet portion 8 of the receptacle 7, such as in the outlet opening 9 of the receptacle 7, by threaded connection, by clamping, squeezing or pressing the inlet end 11 of the insert 10 into the outlet portion 8 of the receptacle 7, or by welding.

In an embodiment, the separation device additionally can comprise a coupling, such as a luer coupling, for connection of the separation device to other equipment.

According to a preferred embodiment, the outlet end 13 of the insert 10 comprises a male luer tip.

According to another presently preferred embodiment, the phase separation device comprises a phase separation element made of porous polyethylene material with a 10 µm pore size and a wall thickness of 1 mm, a receptacle in the form of a HDPE (high-density polyethylene) reservoir cartridge (e.g. SEMCO 2.5fl.oz), and an insert in the form of a polypropylene 1/4" NPT Male luer with threaded fitting in the outlet portion of the receptacle. The phase separator element fits tight in the inlet opening of the insert by pushing it into the inlet opening of the insert.

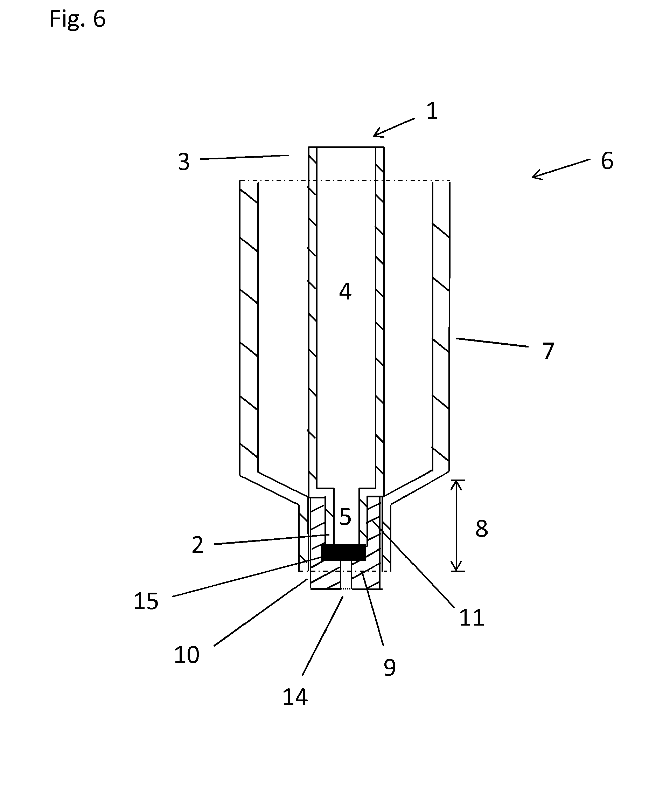

With reference to fig. 6, in one embodiment the phase separation device 6 further comprises a secondary phase separation filter 15, which is positioned horizontally beneath the phase separation element 1 in the outlet portion 8 of the receptacle 7. This secondary phase separation filter 15 is made of a porous and hydrophobic material. Preferably, it is a thin frit, and may be used to further increase the hold-up time for the non-hydrophobic phase, as further described in the Examples.

Fig. 6 shows an embodiment where the phase separation device 6 comprises an insert 10. However, in an alternative embodiment encompassing the secondary phase separation filter 15, the phase separation device 6 does not comprise an insert 10. The secondary phase separation filter 15 may be used in combination with a phase separation element 1 which is either solid or has a lumen 4, and which has or has not an outlet portion 5.

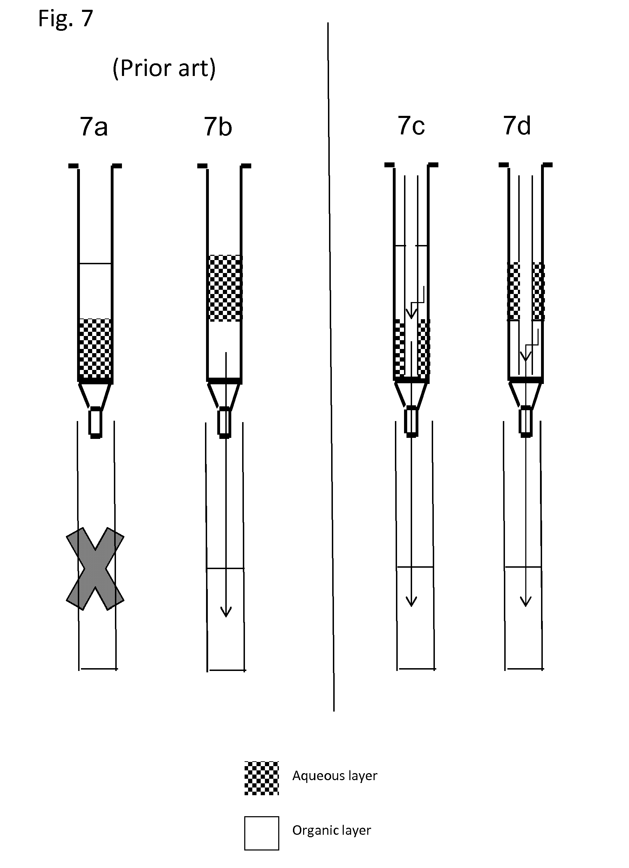

Fig. 7 illustrates the principle of how a prior art phase separator works and how a phase separation device according to the present invention functions. Fig. 7a and 7b depict a prior art phase separator, where a porous and hydrophobic frit is placed horizontally at the bottom of a receptacle. In fig. 7a, a mixture of lighter organic (hydrophobic) liquid and heavier aqueous (non-hydrophobic) liquid is added to the receptacle, in which case the organic liquid has no access to the hydrophobic frit and therefore no phase separation will take place. In fig. 7b, a mixture of heavier organic liquid and lighter aqueous liquid is added to the receptacle, in which case the organic liquid has direct contact with the hydrophobic frit and will pass through the frit and into a collecting receptacle below, and thus phase separation is enabled. Fig. 7c and 7d depict a phase separation device according to the present invention, which comprises a phase separation element placed vertically inside the receptacle. In fig. 7c, a mixture of lighter organic (hydrophobic) liquid and heavier aqueous (non-hydrophobic) liquid is added to the receptacle, whereas in fig. 7d, a mixture of heavier organic liquid and lighter aqueous liquid is added to the receptacle. In both cases 7c and 7d, the organic liquid can pass through the porous and hydrophobic material of the phase separation element from the outside to the inside, and down into acollecting receptacle below. Thus, the device according to the invention allows the organic phase to get separated from the aqueous phase, irrespective of which liquid is heavier.

In an alternative embodiment to those shown in fig. 7c and 7d, the mixture of immiscible liquids is poured into the phase separation element, in which case the hydrophobic liquid will pass through the phase separation element from the inside to the outside, and into the surrounding receptacle, from which it may, or may not, be allowed to pass into a collecting receptacle below. This embodiment is suitable for separation of larger volumes of liquids.

Consequently, the phase separation device according to the present invention provides permeation of hydrophobic solvent from the outside to the inside, or from the inside to the outside of the phase separation element. The permeation can take place along the entire surface of the porous and hydrophobic material of the phase separation element.

In an embodiment, the receptacle of the phase separation device is designed to have an open top end, which simplifies connection to processing equipment upstream of the phase separation device, and thereby enables automation of the separation process. In an alternative embodiment, the receptacle has a closed top end.

The separation device of the present invention may be compatible with existing process equipment to which it may be relevant to connect the separation device, such as gravity racks, retort stands/clamps, connection tubes, or VacMaster glass boxes. In preferred embodiments of the invention, the separation device has a bottom luer tip and/or is compatible with plastic or Teflon stop-cocks.

Suitably, the phase separation element is a disposable article, which is adapted to be temporarily connected to a non-disposable receptacle and optionally to a non-disposable insert, for example by threaded fitting or by pushing, squeezing or clamping the phase separator element into the outlet portion of the receptacle, and/or the inlet of the insert. Alternatively, the phase separation element is adapted to be permanently connected to a receptacle, and optionally to an insert, for example by welding the pieces together. In this case, the resulting assembly is meant to be either disposable or non-disposable.

In a preferred embodiment of the present invention, the phase separation element is adapted to fit into a cartridge architecture, for example into a receptacle having a size in the range of from 1mL to 100L, such as 3mL, 6mL, 15mL, 25mL, 70mL, 150mL, 500mL, 1L, 10L, 20L, 50L or 100L. The phase separation element will be differently sized depending on the size of the receptacle to be used and depending on the intended application. For example, the length, diameter, pore size, and/or wall thickness the phase separation element may be varied to adapt it to various applications.

The phase separation element of the present invention must evidently be chemically resistant to the solvents it is required to separate. Industry standard solvent resistant plastics and frit materials will be used for the phase separation device according to the present invention. Further, it shall have a retention time for aqueous liquids and a liquid flow rate similar to or better than existing phase separators.

Examples of suitable materials for the phase separation element are, as described above, porous and hydrophobic polymer materials, such as polyethylene, polypropylene and polytetrafluoroethylene (PTFE).

Industrial applications of the present invention include breaking dispersions and separating an organic phase from an aqueous phase in a reaction workup. Also other applications in separating organic liquids from aqueous phases in environmental, food and agriculture, fragrance and flavour industries are contemplated.
Like for like comparison between traditional liquid-liquid-extraction devices and the phase separation device according to the present invention show time and solvent efficiency advantages in phase separations, thus adding greater convenience.

### EXAMPLES

The phase separator according to the present invention separates organic solvents from aqueous solvents irrespective of whether the organic solvent is heavier or lighter than the aqueous solvent. This is illustrated by the following experimental data obtained by testing a phase separation device according to the invention. The phase separation element used was made of polyethylene with a pore size of 10 µm, a wall thickness of 1 mm and a lumen having a diameter of approximately 5.5 mm, obtainable from Filtrona Filter Products (Jarrow, Newcastle, U.K.).

As seen in Table 1, heavy organic (i.e. hydrophobic) solvent (lower phase layer) ran through the phase separation element, while the aqueous solvent (upper phase layer) was retained for more than 12 hours. This is a similar performance compared to previously known phase separators, but a wider volume range is handled by the phase separation element according to the invention. Additionally, in the phase separation element according to the invention, a light organic solvent (upper layer) ran through the separation element (approx 15ml/min) and the aqueous solvent (lower layer) was retained for more than 12 hours, except when using ethyl acetate, for which the retention of the aqueous solvent was shorter than for other organic solvents due to azeotropic and physical properties.

**Table 1. Evaluation using 50/50 v/v mixtures of water/organic solvent (60mL total)**

| **Solvent** | **Solvent flow (ml/min)** | **Water hold up (hrs)** | **Polarity Index** | **Water solubility (w/w %)** |
|---|---|---|---|---|
| Heptane | 10 | 12+ | 0.1 | 0.0004 |
| Hexane | 10 | 12+ | 0.1 | 0.0012 |
| Pet.Ether | 10 | 12+ | 0.1 | - |
| Toluene | 10 | 12+ | 2.4 | 0.05 |
| Dichloromethane | 30 | 12+ | 3.1 | 1.3 |
| 1,2 Dichloroethane | 30 | 12+ | 3.5 | 0.81 |
| Ethyl Acetate | 6 | 6 mins | 4.4 | 8.7 |

A further experiment was also made when using ethyl acetate as the organic solvent. An additional (secondary) phase separation filter was placed horizontally in the outlet portion of the receptacle, beneath the outlet opening of the phase separation element, as illustrated schematically in fig. 5. This secondary phase separation filter was in the form of a thin frit plate made of polytetrafluoroethylene (PTFE), obtainable from Porvair, and it significantly improved the retention time (or hold-up time) of the aqueous solvent phase in the receptacle.

The present invention is not limited to the above-described preferred embodiments. Various alternatives, modifications and equivalents may be used. Therefore, the above embodiments should not be taken as limiting the scope of the invention, which is defined by the appended claims.

## Claims

1. A phase separation element (1), comprising a porous and hydrophobic material, **characterised in that** the phase separation element (1) is a cylinder having a first end (2) and a second end (3).

2. The phase separation element (1) according to claim 1, in which the cylinder is tubular, and has a lumen (4).

3. The phase separation element (1) according to claim 1 or 2, which has a cylinder wall thickness of at least 0.5 mm, such as 1, 2, 3, 5, or 10 mm.

4. The phase separation element (1) according to any preceding claim, in which the cylinder has an outlet portion (5) having an outlet opening (16) at the first end (2).

5. The phase separation element (1) according to claim 1, which is solid.

6. The phase separation element (1) according to any preceding claim, which essentially consists of a porous and hydrophobic polymer material, such as polyethylene, polypropylene or polytetrafluoroethylene.

7. The phase separation element (1) according to any preceding claim, wherein the porous and hydrophobic material has a pore size of above 2 µm and maximum 100 µm, such as 5, 10, 15, 20, 50, 75 or 100 µm.

8. A phase separation device (6) comprising a receptacle (7) having an outlet portion (8) comprising an outlet opening (9), and a phase separation element (1) comprising a porous and hydrophobic material, **characterised in**
**that** the phase separation element (1) is a cylinder having a first end (2) and a second end (3), that the phase separation element (1) is in fluid communication with the outlet opening (9) of the receptacle (7), and that the phase separation element (1) is adapted to fit tight in the outlet portion (8) of the receptacle (7).

9. A phase separation device (6) comprising a receptacle (7) having a bottom portion (17), and a phase separation element (1) comprising a porous and hydrophobic material, wherein the bottom portion (17) has an inner surface and optionally has an outlet portion (8) comprising an outlet opening (9), **characterised in that** the phase separation element (1) is a cylinder having a first end (2) and a second end (3) and a base surface comprising at least three circumferential points that are adapted to contact the inner surface of the bottom portion (17) of the receptacle (7), and that the base surface of the cylinder has a different shape than the cross section area of the bottom portion (17), and that the phase separation element (1) is adapted to fit in the bottom portion (17) by connection between the inner surface of the bottom portion (17) and the at least three circumferential points of the base surface of the cylinder.

10. The phase separation device (6) according to claim 8 or 9, wherein the phase separation element (1) is as defined in any one of claims 2-7.

11. The phase separation device (6) according to any one of claims 8-10, comprising a plurality of phase separation elements (1), each of which is a cylinder comprising a porous and hydrophobic material and is adapted to fit in a hole in the outlet portion (8) of the receptacle (7).

12. The phase separation device (6) according to claim 11, wherein each hole in the outlet portion (8) of the receptacle (7) is connected to the outlet opening (9) of the receptacle (7).

13. The phase separation device (6) according to any one of claims 7-12, wherein the outlet portion (8) of the receptacle (7) comprises an insert (10), which has an inlet end (11) having an inlet opening (12) and an outlet end (13) having an outlet opening (14) and a lumen extending through the insert 10, wherein the inlet end (11) of the insert (10) is adapted to fit tight in the outlet portion (8) of the receptacle (7), and wherein the phase separation element (1) is adapted to fit tight in the inlet opening (12) of the insert, and wherein the phase separation element (1) is in fluid communication with the outlet opening (14) of the insert (10).

14. The phase separation device (6) according to claim 13 wherein the outlet end (13) of said insert (10) comprises a male luer tip.
